Europäisches Patentamt

**European Patent Office**

Office européen des brevets

(11) Numéro de publication: **0 250 470 B1**

(12)

# FASCICULE DE BREVET EUROPEEN

(45) Date de publication du fascicule du brevet:
**17.07.91 Bulletin 91/29**

(21) Numéro de dépôt: **86906759.5**

(22) Date de dépôt: **10.12.86**

(86) Numéro de dépôt international:
**PCT/CH86/00174**

(87) Numéro de publication internationale:
**WO 87/03528 18.06.87 Gazette 87/13**

(51) Int. Cl.⁵: **B25J 17/02**

(54) **DISPOSITIF POUR LE DEPLACEMENT ET LE POSITIONNEMENT D'UN ELEMENT DANS L'ESPACE.**

(30) Priorité: **16.12.85 CH 5348/85**

(43) Date de publication de la demande:
**07.01.88 Bulletin 88/01**

(45) Mention de la délivrance du brevet:
**17.07.91 Bulletin 91/29**

(84) Etats contractants désignés:
**AT BE CH DE FR GB IT LI LU NL SE**

(56) Documents cités:
**EP-A- 0 009 447**
**EP-A- 0 127 895**
**DE-U- 8 511 729**
**FR-A- 2 542 419**
**FR-A- 2 549 916**
**FR-A- 2 550 985**
**GB-A- 2 060 556**

(56) Documents cités:
**US-A- 2 286 571**
**US-A- 3 419 238**
**US-A- 4 234 150**
**Soviet Inventions Illustrated, Derwent Publications Ltd, Section P6, semaine Y 45, résumé no. K 0917, 20 décembre 1977**

(73) Titulaire: **SOGEVA S.A.**
**PAV-EPFL Ecublens**
**CH-1015 Lausanne (CH)**

(72) Inventeur: **CLAVEL, Reymond**
**Route du Bois 12**
**CH-1024 Ecublens (CH)**

(74) Mandataire: **Ganguillet, Cyril**
**ABREMA Agence Brevets & Marques**
**Ganguillet & Humphrey Rue Centrale 5 C.P. 2065**
**CH-1002 Lausanne (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

L'invention concerne un dispositif pour le déplacement et le positionnement d'un élément dans l'espace.

La plupart des dispositifs du type ci-dessus que l'on connaît, tels que par exemple les principaux robots industriels connus, comportent un élément porteur supportant un poignet, l'élément porteur comportant trois axes dits principaux destinés à définir trois degrés de liberté qui peuvent être des rotations et/ou des translations, de façon à positionner le poignet dans l'espace, l'orientation dudit poignet étant à son tour commandée par un à trois axes dits secondaires, selon un à trois degrés de liberté supplémentaires qui sont nécessairement des rotations.

Dans ces dispositifs, dont la configuration de l'élément porteur peut être du type cartésien, à coordonnées cylindriques, à coordonnées sphériques, du type SCARA (Selective Compliance Assembly Robot) ou à coordonnées angulaires, la commande des degrés de liberté se fait en série. Le premier axe principal est utilisé comme référence pour le mouvement du deuxième axe principal, celui-ci servant de référence au mouvement du troisième axe principal, qui à son tour sert de référence aux degrés de liberté définissant l'orientation du poignet.

Cette configuration en série nécessite la localisation des moteurs d'entraînaient au niveau de chaque axe ou demande une configuration lourde et compliquée pour la transmission du mouvement aux axes, et, par conséquent, même dans le cas du déplacement d'une petite charge, des masses importantes doivent être mises en mouvement.

On connaît d'autre part un dispositif de configuration semblable à celle d'un simulateur de vol, comportant six axes travaillant en parallèle. Dans ce cas, les moteurs peuvent être fixes, ce qui limite les masses à mettre en mouvement. Cependant, ce genre de dispositif ne permet d'atteindre qu'un volume de travail très restreint.

Un dispositif dans lequel la commande des trois degrés de liberté de base s'effectue en parallèle est décrit dans le brevet US-A-2,286,571. Ce dispositif est destiné au positionnement et à la commande du mouvement d'un pistolet à peinture. Il comprend trois actionneurs solidaires d'un élément de base, chacun des actionneurs comportant une partie fixe et un bras mobile monté en rotation à l'une de ses extrémité sur la partie fixe de l'actionneur. Sur la seconde extrémité de chacun des bras sont montés respectivement trois barres de liaison par l'intermédiaire d'articulations du type cardan montées respectivement à l'une des extrémités des barres de liaison. Deux des barres de liaison sont montées en articulation à leur seconde extrémité sur la troisième barre de liaison, près de sa seconde extrémité. Le support de pistolet est monté en articulation à l'extrémité de la troisième barre de liaison.

La demande de brevet FR-A-2,550,985 décrit un autre dispositif dans lequel la commande des trois degrés de liberté de base s'effectue en parallèle. Ce document concerne un bras extensible rétractable et pliant, composé d'une pluralité d'éléments extensibles montés en série et comportant chacun trois actionneurs agissant en parallèle.

Toutefois, les dispositifs connus sont mal adaptés pour le transfert de pièces légères à des cadences très élevées.

Le but de la présente invention est de proposer un dispositif pour le déplacement et le positionnement d'un élément dans l'espace, et en particulier un robot industriel de configuration nouvelle et avantageuse permettant la commande des trois degrés de liberté de base en parallèle à partir d'actionneurs disposés sur un support fixe, en conservant le parallélisme de l'élément mobile par rapport au support fixe, particulièrement adapté pour le transfert de pièces légères à des cadences très élevées. Aucun des dispositifs connus ne présente de telles caractéristiques.

A cet effet, la présente invention concerne un dispositif pour le déplacement et le positionnement d'un élément dans l'espace, comportant au moins un élément de base, au moins un élément mobile et au moins trois actionneurs comportant chacun une partie fixe et une partie mobile ayant un seul degré de liberté par rapport à sa partie fixe, la partie fixe de chaque actionneur étant solidaire de l'élément de base, la partie mobile de chacun d'eux étant rendue solidaire de l'élément mobile par l'intermédiaire d'un élément de liaison, l'ensemble étant agencé de façon que l'inclinaison et l'orientation dans l'espace de l'élément mobile restent inchangés, quels que soient les mouvements des parties mobiles des actionneurs, chacun des éléments de liaison étant monté, d'une part, en articulation sur la partie mobile de l'actionneur de façon à avoir deux degrés de liberté par rapport à ladite partie mobile de l'actionneur, et monté, d'autre part, en articulation sur l'élément mobile de façon à avoir deux degrés de liberté par rapport à l'élément mobile.

Selon une première forme de l'invention, la partie mobile de chaque actionneur est montée en rotation autour d'un axe solidaire de la partie fixe dudit actionneur.

Selon une seconde forme de l'invention, la partie mobile de chaque actionneur est montée en translation par rapport à la partie fixe dudit actionneur, et ladite partie mobile est agencée de façon à empêcher sa rotation autour de l'axe du mouvement de translation.

Selon une caractéristique de l'invention, le dispositif comporte un élément de travail solidaire de l'élément mobile et un moteur supplémentaire destiné à commander la rotation de l'élément de travail autour de son axe longitudinal.

Selon une forme de l'invention, au moins un des éléments de liaison comporte deux barres parallèles, chacune desdites barres étant montée à l'une de ses extrémités en articulation sur une extrémité de la partie mobile de l'actionneur, l'autre extrémité de chacune desdites barres étant montée en articulation sur l'élément mobile, d'où il résulte que les deux barres parallèles constituent un parallélogramme déformable. Les articulations des barres parallèles peuvent être des articulations à rotules ou des articulations du type cardan.

Selon une autre forme de l'invention, au moins un des éléments de liaison comporte une barre unique montée à sa première extrémité sur la partie mobile de l'actionneur par l'intermédiaire d'une première articulation du type cardan, et montée à sa seconde extrémité sur l'élément mobile par l'intermédiaire d'une seconde articulation du type cardan.

Le moteur supplémentaire peut être fixé sur l'élément de base ou sur l'élément mobile.

Le dispositif peut être agencé de façon à permettre la mesure d'un déplacement dans l'espace.

Les avantages du dispositif de l'invention sont multiples. Un des avantages principaux est que le volume atteignable est important et que les masses en mouvement sont réduites au minimum. Cette configuration permet le déplacement de pièces dont la masse totale est du même ordre que l'inertie déplacée du dispositif. Les cadences peuvent être très élevées. La présence des trois parties mobiles des actionneurs agissant en parallèle constitue une augmentation de la raideur de la mécanique, ce qui permet, à cadence égale, une meilleure répétabilité de position que celle obtenue avec la plupart des robots industriels connus, même à grande vitesse.

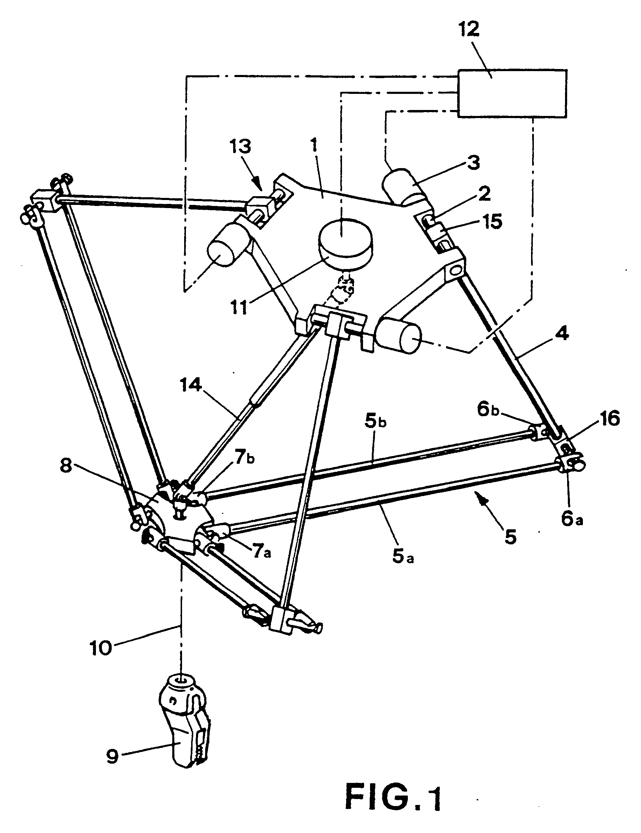

On comprendra mieux l'invention à l'aide de la description qui suit, donnée à titre d'exemple, et qui se réfère au dessin sur lequel la figure 1 représente une vue en perspective d'un exemple schématique de configuration structurelle d'un dispositif selon l'invention.

En se référant à la figure 1, le dispositif comporte un élément de base 1 et un élément mobile 8. L'élément de base 1 comporte trois actionneurs rotatifs 13 comportant chacun une partie fixe 3 solidaire de l'élément de base 1 et dont les axes 2 sont coplanaires. Des bras de commande 4 sont montés sous forme d'assemblage rigide à l'une de leurs extrémités 15 respectivement sur chacun des axes de rotation 2, de façon que l'axe longitudinal de chaque bras soit perpendiculaire à son axe de rotation 2 correspondant. L'autre extrémité 16 de chacun des bras de commande 4 est solidaire de deux barres de liaison 5a, 5b par l'intermédiaire de deux doubles articulations en forme de cardan 6a, 6b. Chacun des deux groupes de barres de liaison 5a, 5b est relié d'autre part par l'intermédiaire de deux doubles articulations 7a, 7b du type cardan à l'élément mobile 8 dont le déplacement peut ainsi être commandé par le mouvement des bras de commande 4. Dans une variante d'exécution du robot représenté à la figure 1, les articulations 6a, 6b et 7a, 7b peuvent être remplacées par des rotules.

Dans la configuration représentée à la figure 1, les barres de liaison 5a, 5b restant constamment parallèles constituent les côtés d'un parallélogramme se déplaçant dans l'espace et déformable en fonction des mouvements respectifs des bras de commande 4. Il en résulte que l'élément mobile 8 reste parallèle à lui-même, quels que soient les mouvements des bras de commande. La même configuration peut être obtenue si l'on remplace les couples de barres de liaison 5a, 5b par des barres uniques 5, chacune des barres 5 étant montée par l'intermédiaire de deux articulations du type cardan fixées respectivement à chacune de ses extrémités, d'une part sur un des bras de commande 4 et d'autre part sur l'élément mobile 8.

Les trois actionneurs 13 sont connectés par l'intermédiaire d'amplificateurs adéquats à un ordinateur 12 de gestion destiné à contrôler les mouvements des bras de commande 4.

Un élément de travail 9 tel que par exemple un élément de préhension, un outil, une ventouse ou une seringue peut être disposé sur l'élément mobile 8. Dans l'exemple représenté à la figure 1, un quatrième degré de liberté du dispositif est constitué par la rotation de l'élément de travail autour d'un axe 10 perpendiculaire à l'élément mobile 8. Cette rotation est commandée par un moteur fixe 11 disposé sur l'élément de base 1, la rotation étant commandée par l'intermédiaire d'un système de tringlerie (par exemple un bras téléscopique 14) et autres éléments de transmission. Bien entendu, selon une autre variante d'exécution, non représentée, le moteur 11 peut être fixé sur l'élément mobile 8 et relié à l'ordinateur de gestion.

Selon une autre variante d'exécution du dispositif de la figure 1, mais non représentée, la configuration décrite ci-dessus peut être complétée en prévoyant la commande des deux degrés de liberté supplémentaires destinés à l'inclinaison de l'élément de travail dans l'espace. Les moteurs d'entraînement correspondants peuvent être fixés sur l'élément de base 1, la transmission du mouvement à l'élément de travail se faisant par un système de tringlerie et/ou de courroies, cardans et autres éléments de transmission. Ces moteurs peuvent aussi être fixés directement sur l'élément mobile 8, les moteurs étant reliés à l'ordinateur de gestion.

Selon une autre forme d'exécution du dispositif, non représentée, les bras de commande 4 qui, dans l'exemple représenté à la figure 1, constituent des parties mobiles tournant autour des axes 2 peuvent être remplacés par des éléments mobiles à guidage rectiligne.

Dans la configuration du dispositif de l'invention représentée à la figure 1, les extrémités des trois bras de commande solidaires de l'élément de base 1 sont disposées selon un triangle équilatéral. Bien entendu, cette disposition n'est nullement exhaustive. D'autre part, bien que le dispositif ait été représenté avec un élément de base et un élément mobile en forme de plaques disposées horizontalement, ces éléments peuvent avoir des formes diverses et être orientés dans des positions quelconques.

Le dispositif de l'invention peut être utilisé dans des domaines d'application très variés. On citera par exemple :
— le montage de circuits imprimés de toutes sortes,
— tout domaine nécessitant un montage de précision et rapide,
— la manipulation et l'emballage d'éléments de toutes sortes,
— la détermination d'une position dans l'espace destinée par exemple à la mesure d'un déplacement ou à un contrôle dimensionnel de pièces, etc.

## Revendications

1. Dispositif pour le déplacement et le positionnement d'un élément dans l'espace, comportant au moins un élément de base (1), au moins un élément mobile (8) et au moins trois actionneurs (13) comportant chacun une partie fixe (3) et une partie mobile (2, 4) ayant un seul degré de liberté par rapport à sa partie fixe, la partie fixe de chaque actionneur étant solidaire de l'élément de base (1), la partie mobile de chacun d'eux étant rendue solidaire de l'élément mobile par l'intermédiaire d'un élément de liaison (5), caractérisé en ce que l'ensemble est agencé de façon que l'inclinaison et l'orientation dans l'espace de l'élément mobile restent inchangés, quels que soient les mouvements des parties mobiles des actionneurs, chacun des éléments de liaison (5) étant monté, d'une part, en articulation sur la partie mobile de l'actionneur de façon à avoir deux degrés de liberté par rapport à ladite partie mobile de l'actionneur, et monté, d'autre part, en articulation sur l'élément mobile (8) de façon à avoir deux degrés de liberté par rapport à l'élément mobile.

2. Dispositif selon la revendication 1, caractérisé en ce qu'au moins un des éléments de liaison (5) comporte deux barres parallèles (5a et 5b), chacune desdites barres étant montée à l'une de ses extrémités en articulation (6a, 6b) sur une extrémité de la partie mobile (4) de l'actionneur, l'autre extrémité de chacune desdites barres étant montée en articulation (7a, 7b) sur l'élément mobile (8), d'où il résulte que les deux barres parallèles constituent un parallélogramme déformable.

3. Dispositif selon la revendication 2, caractérisé en ce que les articulations (6a, 6b et 7a, 7b) des barres parallèles (5a, 5b) sont du type cardan.

4. Dispositif selon la revendication 2, caractérisé en ce que les articulations (6a, 6b et 7a, 7b) des barres parallèles (5a, 5b) sont des articulations à rotule.

5. Dispositif selon la revendication 1, caractérisé en ce qu'au moins un des éléments de liaison (5) comporte une barre unique montée à sa première extrémité sur la partie mobile (4) de l'actionneur par l'intermédiaire d'une première articulation du type cardan, et montée à sa seconde extrémité sur l'élément mobile (8) par l'intermédiaire d'une seconde articulation du type cardan.

6. Dispositif selon l'une des revendications 1 à 5, caractérisé en ce que la partie mobile (4) de chaque actionneur (13) est montée en rotation autour d'un axe (2) solidaire de la partie fixe (3) dudit actionneur.

7. Dispositif selon l'une des revendications 1 à 5, caractérisé en ce que la partie mobile (4) de chaque actionneur (13) est montée en translation par rapport à la partie fixe (3) dudit actionneur, et en ce que ladite partie mobile est agencée de façon à empêcher sa rotation autour de l'axe du mouvement de translation.

8. Dispositif selon l'une des revendications précédentes, caractérisé en ce qu'il comporte un élément de travail (9) solidaire de l'élément mobile (8) et un moteur supplémentaire (11) destiné à commander la rotation de l'élément de travail (9) autour de son axe longitudinal (10).

9. Dispositif selon la revendication 8, caractérisé en ce que le moteur supplémentaire est fixé sur l'élément de base (1),

10. Dispositif selon la revendication 8, caractérisé en ce que le moteur supplémentaire est fixé sur l'élément mobile (8).

11. Dispositif selon l'une des revendications 1 à 10, caractérisé en ce qu'il est agencé de façon à permettre la mesure d'un déplacement dans l'espace.

## Claims

1. A device for the movement and positioning of an element in space, including at least one base member (1), at least one movable member (8) and at least three actuators (13) each of which includes a fixed part (3) and a moving part (2, 4) having only one degree of freedom with respect to its fixed part, the fixed part of each actuator being integral with the base member (1), the moving part of each of them being united with the movable member by way of a linking member (5), characterized in that the whole is arranged so that the inclination and the orientation in space of the movable member remain unchanged whatever the motions of the moving parts of the actuators, each of the linking members (5) being on the one hand mounted by articulation onto the moving part of the actuator so as to have two degrees of freedom with respect to the said moving part of the actuator, and on the other hand mounted by articulation onto the movable member (8) so as to have two degrees of freedom with respect to the movable member.

2. A device as in Claim 1, characterized in that at least one of the linking members (5) includes two parallel bars (5a and 5b), each of the said bars being mounted at one end of it by articulation (6a, 6b) onto one end of the moving part (4) of the actuator, the other end of each of the said bars being mounted by articulation (7a, 7b) onto the movable member (8), whence it results that the two parallel bars constitute a deformable parallelogram.

3. A device as in Claim 2, characterized in that the articulations (6a, 6b and 7a, 7b) of the parallel bars (5a, 5b) are of cardan type.

4. A device as in Claim 2, characterized in that the articulations (6a, 6b and 7a, 7b) of the parallel bars (5a, 5b) are ball-and-socket articulations.

5. A device as in Claim 1, characterized in that at least one of the linking members (5) includes one single bar mounted at its first end on the moving part (4) of the actuator by way of a first articulation of cardan type, and mounted at its second end on the movable member (8) by way of a second articulations of cardan type.

6. A device as in one of the Claims 1 to 5, characterized in that the moving part (4) of each actuator (13) is mounted to rotate about an axis (2) integral with the fixed part (3) of the said actuator.

7. A device as in one of the Claims 1 to 5, characterized in that the moving part (4) of each actuator (13) is mounted for translation with respect to the fixed part (3) of the said actuator, and in that the said moving part is arranged so as to prevent its rotation about the axis of the motion of translation.

8. A device as in one of the preceding Claims, characterized in that it includes a work member (9) integral with the movable member (8) and a supplementary motor (11) intended for controlling the rotation of the work member (9) about its longitudinal axis (10).

9. A device as in Claim 8, characterized in that the supplementary motor is fixed to the base member (1).

10. A device as in Claim 8, characterized in that the supplementary motor is fixed to the movable member (8).

11. A device as in one of the Claims 1 to 10, characterized in that it is arranged so as to enable measurement of a displacement in space.


## Patentansprüche

1. Einrichtung zum Bewegen und Positionieren eines Gegenstandes im Raum, mit wenigstens einem Grundteil (1), wenigstens einem beweglichen Teil (8) und wenigstens drei Betätigungsanordnungen (13), deren jede einen feststehenden Abschnitt (3) aufweist sowie einen beweglichen Abschnitt (2, 4) mit einem einzigen Freiheitsgrad bezüglich seines feststehenden Abschnitts, wobei der feststehende Abschnitt einer jeden Betätigungsanordnung fest mit dem Grundteil (1) verbunden ist, während jeder bewegliche Abschnitt der Betätigungsanordnung fest mit dem beweglichen Teil über ein Verbindungsteil (5) verbunden ist, dadurch gekennzeichnet, daß die Gesamtanordnung derart ausgestaltet ist, daß die Neigung und die Ausrichtung im Raum des beweglichen Teils unverändert bleiben bei beliebigen Bewegungen der beweglichen Abschnitte der Betätigungsanordnungen, wobei jedes Verbindungsteil (5) einerseits gelenkig am beweglichen Abschnitt der Betätigungsanordnung derart angeordnet ist, daß es zwei Freiheitsgrade bezüglich des beweglichen Teils der Betätigungsanordnung aufweist und andererseits gelenkig am beweglichen Teil (8) derart angeordnet ist, daß es zwei Freiheitsgrade bezüglich des beweglichen Teils aufweist.

2. Einrichtung nach Anspruch 1, dadurch gekennzeichnet, daß wenigstens eines der Verbindungsteile zwei parallele Stangen (5a und 5b) aufweist, wobei jede Stange an einem Ende über ein Gelenk (6a, 6b) mit einem Ende des beweglichen Teils (4) der Betätigungsanordnung verbunden ist, während das andere Ende einer jeden Stange über ein Gelenk (7a, 7b) mit dem beweglichen Teil (8) verbunden ist, so daß die beiden parallelen Stangen ein verformbares Parallelogramm bilden.

3. Einrichtung nach Anspruch 2, dadurch gekennzeichnet, daß die Gelenke (6a, 6b und 7a, 7b) der parallelen Stangen (5a, 5b) Kardangelenke sind.

4. Einrichtung nach Anspruch 2, dadurch gekennzeichnet, daß die Gelenke (6a, 6b und 7a, 7b) der parallelen Stangen (5a, 5b) Kugelgelenke sind.

5. Einrichtung nach Anspruch 1, dadurch gekennzeichnet, daß wenigstens eines der Verbindungsteile (5) einen einzigen Stab aufweist, dessen eines Ende mit dem beweglichen Abschnitt (4) der Betätigungsanordnung über ein erstes Kardangelenk verbunden ist und dessen anderes Ende mit dem beweglichen Teil (8) über ein zweites Kardangelenk verbunden ist.

6. Einrichtung nach einem der Ansprüche 1 bis 5, dadurch gekennzeichnet, daß der bewegliche Abschnitt (4) einer jeden Betätigungsanordnung (13) drehbar um eine Achse (2) angeordnet ist, die fest mit dem feststehenden Abschnitt (3) der Betätigungsanordnung verbunden ist.

7. Einrichtung nach einem der Ansprüche 1 bis 5, dadurch gekennzeichnet, daß der bewegliche Abschnitt (4) einer jeden Betätigungsanordnung (13) verschiebbar bezüglich des feststehenden Abschnitts (3) der Betätigungsanordnung ist und daß der bewegliche Abschnitt derart ausgestaltet ist, daß seine Verdrehung um die Verschiebeachse ausgeschlossen ist.

8. Einrichtung nach einem der vorhergehenden Ansprüche, dadurch gekennzeichnet, daß sie ein Arbeitsteil (9) aufweist, das fest mit dem beweglichen Teil (8) verbunden ist sowie einen Zusatzmotor (11) aufweist zur Steuerung der Drehung des Arbeitsteils (9) um seine Längsachse (10).

9. Einrichtung nach Anspruch 8, dadurch gekennzeichnet, daß der Zusatzmotor am Grundteil (1) befestigt ist.

10. Einrichtung nach Anspruch 8, dadurch gekennzeichnet, daß der Zusatzmotor am beweglichen Teil (8) befestigt ist.

11. Einrichtung nach einem der Ansprüche 1 bis 10, dadurch gekennzeichnet, daß sie derart ausgelegt ist, daß sie eine Messung einer Bewegung im Raum ermöglicht.

**FIG.1**